# EUROPÄISCHE PATENTANMELDUNG

(11) **EP 1 561 673 A2**
(43) Veröffentlichungstag der Anmeldung: **10.08.2005**
(21) Anmeldenummer: 05075147.8
(22) Anmeldetag: 19.01.2005
(51) Int. Cl.: B62D 15/02

(54) **Verfahren und Vorrichtung zum Einparken für ein Kraftfahrzeug**

(30) Priorität: 05.02.2004 DE 102004006468
(71) Anmelder: Volkswagen AG, 38436 Wolfsburg (DE)
(72) Erfinder: Rohlfs, Michael, Dr., 38527 Meine (DE); Chlosta, Sven, 38547 Calberlah (DE)
(74) Vertreter: Effert, Bressel und Kollegen

(57) **Zusammenfassung**

Vorrichtung und Verfahren zur Unterstützung eines Fahrers beim Einparken eines Kraftfahrzeugs in eine Quer- oder Kopfparklücke, wobei mindestens ein Segment für einen Soll-Fahrweg des Kraftfahrzeugs in die Quer- oder Kopfparklücke berechenbar ist, eine Abweichung des Ist-Fahrweg des Kraftfahrzeugs von dem Soll-Fahrweg (5,8) mittels mindestens eines Sensors (2) erfassbar ist und mittels einer Regeleinrichtung (16) kontinuierliche Fahr- und/oder Lenkanweisungen mindestens über einen Teilweg zum Einparken in eine Kopf- oder Querparklücke (7,9) in Abhängigkeit der Abweichung berechenbar sind.

## Beschreibung

Die Erfindung betrifft ein Verfahren und eine Vorrichtung zur Unterstützung eines Fahrers beim Einparken eines Kraftfahrzeugs in eine Quer- oder Kopfparklücke.

Eine derartige Vorrichtung ist beispielsweise aus der DE 38 13 083 A1 bekannt, wobei mit einer Steuerung ein möglicher Fahrweg des Kraftfahrzeugs in eine Quer- oder Kopfparklücke berechnet werden. Dabei werden als Fahrweg Kreisbögen berechnet. Fahrt- und/oder Lenkanweisungen werden akustisch und/oder optisch ausgegeben. Um einen minimalen Wendekreis zu erhalten, muss das Lenkrad zu Beginn des Einparkens bis zum Anschlag in eine Richtung gedreht werden. Beim Einparken in eine Querparklücke wird der Fahrer an einem berechneten Bezugspunkt aufgefordert, dass Lenkrad in die Gegenrichtung zu drehen. Die realen Wenderadien eines Fahrzeugs weichen jedoch aufgrund von Reifendruck, Reifenabnutzen, Spureinstellungen und anderen Fahrzeugeigenschaften von den idealen Wenderadien ab. Der aufgrund des idealen Wenderadius berechnete Fahrweg führt daher vielfach zu einem unbefriedigenden Einparkergebnis.

Aus der EP 846 593 B1 ist es daher bekannt, Fahrt- und Lenkanweisungen für einen rückwärtigen Einparkvorgang in eine Querparklücke nur bis zu dem Bezugspunkt auszugeben. Da der Beginn des Zurücksetzens maßgeblich für einen erfolgreichen Einparkvorgang ist, ist die Unterstützung des Fahrers über einen Teilweg vielfach ausreichend. Abweichungen des realen Fahrwegs aufgrund von Toleranzen müssen durch den Fahrer selbst korrigiert werden.

Der Erfindung liegt ausgehend vom Stand der Technik das technische Problem zugrunde, ein Verfahren und eine Vorrichtung zu schaffen, durch welche eine Unterstützung des Fahrers beim Einparken in eine Kopf- oder Querparklücke verbessert wird.

Die Lösung des Problems ergibt sich durch die Gegenstände mit den Merkmalen der Patentansprüche 1 und 8. Weitere vorteilhafte Ausgestaltungen der Erfindung ergeben sich aus den Unteransprüchen.

Hierfür werden neben einem Soll-Fahrweg zum Einparken in eine Kopf- oder Querparklücke Abweichungen eines Ist-Fahrwegs von dem Soll-Fahrweg erfasst und mittels einer Regeleinrichtung kontinuierliche Fahrt- und/oder Lenkanweisungen in Abhängigkeit der Abweichung berechnet. Dabei ist sowohl eine Unterstützung des Fahrers über den gesamten Einparkvorgang, als auch über Teilwege möglich. Eine Korrektur vorgegebener Fahrt- und/oder Lenkanweisungen durch den Fahrer ist nicht notwendig. Ist eine Einhaltung des Soll-Fahrwegs durch Fahrt- und/oder Lenkeingriffe nicht realisierbar, beispielsweise aufgrund grober Fahrfehler zu Beginn des Einparkvorgangs und/oder aufgrund starker Abweichungen der Fahrzeugtoleranzen, so ist ein neuer Soll-Fahrweg ermittelbar, durch den der Fahrweg in die Parklücke ausgehend von den neuen Randbedingungen optimiert wird.

In einer bevorzugten Ausführungsform erfolgen die Fahrt- und/oder Lenkanweisungen optisch, akustisch und/oder haptisch. Der Fahrer kann vorzugsweise selbst entscheiden, welche Art der Unterstützung erfolgen soll. Die Auswahl erfolgt beispielsweise per Tastendruck.

In einer weiteren bevorzugten Ausführungsform erfolgt die haptische Lenkanweisung als Zusatzlenkmoment, als Überlagerungswinkel und/oder als Lenkmoment zum automatischen Lenken. Das Zusatzlenkmoment und/oder das Lenkmoment zum automatischen Lenken sind beispielsweise mittels einer elektromechanischen Lenkhilfe aufbringbar. Der Überlagerungswinkel ist beispielsweise mittels einer Überlagerungslenkung aufbringbar. Die Art und Weise der haptischen Lenkanweisung ist von der Ausstattung des Fahrzeugs und/oder den Wünschen des Fahrers abhängig.

In einer weiteren bevorzugten Ausführungsform wird der ideale Fahrweg in Querparklücke aus drei geraden Segmenten genähert, die durch Kreisbögen und/oder Ellipsen tangential miteinander verbunden sind. Dadurch ist eine einfache Abbildung des idealen Fahrwegs in eine Querparklücke gegeben.

In einer weiteren bevorzugten Ausführungsform wird der ideale Fahrweg in eine Kopfparklücke aus zwei geraden Segmenten genähert, die durch einen Kreisbogen verbunden sind. Dabei wird unter Kopfparklücke nicht nur eine senkrechte zum Bordstein angeordnete Parklücke verstanden, sondern auch Parklücken beliebigen Winkels.

In einer weiteren bevorzugten Ausführungsform ist die Berechnung des Soll-Fahrwegs adaptiv an Fahrzeugtoleranzen und/oder ein Fahrverhalten und/oder einen Zustand der Fahrbahn anpassbar. Der Ist-Fahrweg beim Einparken ist abhängig von Fahrzeugtoleranzen wie Reifendruck oder Spureinstellungen, sowie dem Fahrverhalten des Fahrers. Durch eine Adaption kann der optimale Fahrweg zum Einparken in Quer- und Kopfparklücken an bestehende Rahmenbedingungen angepasst werden.

In einer weiteren bevorzugten Ausführungsform ist der mindestens eine Sensor zur Ermittlung der Abweichung des Ist-Fahrwegs des Fahrzeugs von dem Soll-Fahrweg als Raddrehimpulssensor, Raddrehzahlsensor, Raddrehgeschwindigkeitssensor, Abstandssensor, Winkelsensor und/oder Bewegungssensor ausgebildet. Bei der Ausbildung als Raddrehimpulssensor, Raddrehzahlsensor und/oder Reddrehgeschwindigkeitssensor kommen vorzugsweise mindestens zwei Sensoren zur Anwendung, die vorzugsweise den Rädern einer Achse zugeordnet sind. Für eine gute Unterstützung des Einparkvorgangs wird vorzugsweise das gesamte Fahrzeugumfeld durch geeignete Sensoren erfasst. Es ist jedoch in Einzelfällen denkbar, dass einzelne Bereiche des Fahrzeugumfelds für die Ermittlung des idealen Soll-Fahrwegs und/oder der Abweichungen davon ausreichend sind.

Die Erfindung wird nachfolgend anhand eines bevorzugten Ausführungsbeispiele näher erläutert. Die Figuren zeigen:
- Fig. 1:: eine schematische Darstellung einer Vorrichtung zur Unterstützung eines Einparkvorgangs,
- Fig. 2:: einen Soll-Fahrweg zum Einparken in eine Querparklücke und
- Fig. 3:: einen Soll-Fahrweg zum Einparken in eine Kopfparklücke.

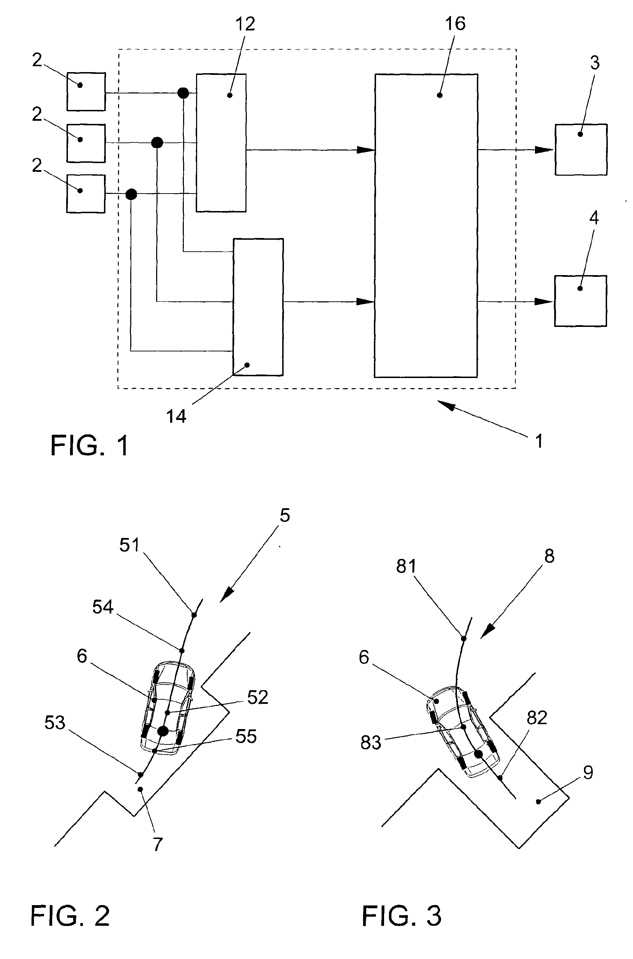

Fig. 1 zeigt schematisch eine Vorrichtung 1 zur Unterstützung eines Einparkvorgangs. Die Vorrichtung 1 umfasst eine Recheneinheit 12, zur Ermittlung eines Soll-Fahrwegs, eine Recheneinheit 14 zur Ermittlung von Abweichungen des Ist-Fahrwegs von dem Soll-Fahrweg und eine Regeleinrichtung 16 zur Ermittlung kontinuierlicher Fahr- und/oder Lenkanweisungen aufgrund des Soll-Fahrwegs und der Abweichungen. Die Recheneinheiten 12, 14 und die Regeleinheit 16 können als gemeinsames Bauteil oder getrennt ausgebildet sein. Mittels geeigneter Sensoren 2 wird die relative Lage des Fahrzeugs zu einer Parklücke und das Fahrzeugumfeld bestimmt. Als Fahrzeugumfeld wird dabei beispielsweise die Größe einer Parklücke, der Abstand zu einem Bordstein und/oder der Abstand zu einem Hindernis bezeichnet. Mittels dieser Daten wird dann eine Sollkurve bestimmt. Dabei eignen sich insbesondere Abstandssensoren und/oder Kameras zur Bestimmung der relativen Lage sowie des Fahrzeugumfeldes.

Mittels der Sensoren 2 wird darüber hinaus die Ist-Position erfasst und die Abweichung von der Soll-Position in der Recheneinheit 14 berechnet. Vorzugsweise sind die Sensoren 2 zur Bestimmung der Ist-Position als Raddrehimpuls und/oder Raddrehzahlsensoren ausgebildet, wobei vorzugsweise von allen Rädern, mindestens aber von zwei Rädern einer Achse die Reifengeschwindigkeiten oder Raddrehimpulse ermittelt werden. Insbesondere aus den Daten der Raddrehimpulssensoren lässt sich sehr einfach die Ist-Position bzw. Ist-Kurve ermitteln. Ergänzend oder alternativ können die Sensoren 2 zur Ermittlung der Ist-Postition als Abstandssensoren, Winkelsensoren und/oder Bewegungssensoren ausgebildet sein. Dabei können die Sensoren zur Bestimmung der relativen Lage und des Fahrzeugumfeldes auch zur Bestimmung der Ist-Position herangezogen werden, was in der Fig. 1 dargestellt ist. Es ist aber möglich, völlig voneinander getrennt arbeitende Sensoren zu verwenden. Anhand des Soll-Fahrwegs und der Abweichungen werden durch die Regeleinheit 16 kontinuierliche Fahrt- und/oder Lenkanweisungen ermittelt. Diese werden dem Fahrer durch eine optische und/oder akustische Anzeigeeinheit 3 mitgeteilt. Der Fahrer wird anhand der optischen und/oder akustischen Signale im Einparkvorgang unterstützt.

Bedarfsweise werden die Lenkanweisungen zusätzlich an eine Steuereinrichtung 4 übermittelt. Durch die Steuereinrichtung 4 erfolgt eine Korrektur eines Lenkeingriffs anhand der durch die Regeleinheit 16 ermittelten Lenkanweisungen. Anstelle einer Korrektur des Lenkeingriffs durch die Steuereinrichtung 4 ist auch eine Veränderung eines Moments, vorzugsweise Rückstellmomentes, denkbar, das am Lenkrad durch den Fahrer wahrgenommen wird. Der Fahrer wird dadurch haptisch auf eine notwendige Korrektur des Lenkeingriffs hingewiesen. Der Lenkeingriff liegt jedoch im Ermessen des Fahrers.

Fig. 2 zeigt schematisch einen idealen Fahrweg 5 zum Einparken eines Fahrzeugs 6 in eine Querparklücke 7. Der ideale Fahrweg 5 setzt sich aus drei geraden Segmenten 51, 52, 53 zusammen, die durch Kreisbögen 54, 55 verbunden sind. Durch die in Fig. 1 dargestellte Vorrichtung sind Fahrt- und/oder Lenkanweisungen über den vollständigen Fahrweg ermittelbar. Abweichung einer Ist-Position des Fahrzeugs 6 beim Einparken werden erfasst und in den Fahrt- und/oder Lenkanweisungen berücksichtigt.

Fig. 3 zeigt schematisch einen idealen Fahrweg 8 zum Einparken eines Fahrzeugs 6 in eine Kopfparklücke 9. Der ideale Fahrweg 8 setzt sich aus zwei geraden Segmenten 81, 82 zusammen, die durch einen Kreisbogen 83 verbunden sind. Durch die in Fig. 1 dargestellte Vorrichtung sind auch bei der Kopfparklücke die Fahrt- und/oder Lenkanweisungen über den vollständigen Fahrweg ermittelbar. Die Regelung berücksichtigt dabei ebenfalls die Abweichung einer Ist-Position des Fahrzeugs 6 von dem Soll-Fahrweg.

Die idealen Fahrwege sind abhängig vom Fahrzeugtyp, beispielsweise von der Länge des Fahrzeugs. Die Berechnung des Soll-Fahrwegs ist daher an den jeweiligen Fahrzeugtyp angepasst. Da jedoch auch Fahrzeuge eines Fahrzeugtyps aufgrund von Toleranzen unterschiedliches Verhalten aufweisen können, erfolgt vorzugsweise eine Anpassung des Soll-Fahrwegs an ein Ist-Verhalten des Fahrzeugs.

## Patentansprüche

1. Vorrichtung zur Unterstützung eines Fahrers beim Einparken eines Kraftfahrzeugs in eine Quer- oder Kopfparklücke, wobei mindestens ein Segment für einen Soll-Fahrweg des Kraftfahrzeugs in die Quer- oder Kopfparklücke berechenbar ist,
**dadurch gekennzeichnet, dass**
eine Abweichung des Ist-Fahrweg des Kraftfahrzeugs von dem Soll-Fahrweg (5, 8) mittels mindestens eines Sensors (2) erfassbar oder ermittelbar ist und mittels einer Regeleinrichtung (16) kontinuierliche Fahr- und/oder Lenkanweisungen mindestens über einen Teilweg zum Einparken in eine Kopf- oder Querparklücke (7, 9) in Abhängigkeit der Abweichung berechenbar sind.

2. Vorrichtung nach Anspruch 1, **dadurch gekennzeichnet, dass** Fahrt- und/oder Lenkanweisungen optisch, akustisch und/oder haptisch ausgegebbar sind.

3. Vorrichtung nach Anspruch 2, **dadurch gekennzeichnet, dass** die haptische Ausgabe ein Zusatzlenkmoment, ein Überlagerungswinkel und/oder ein Lenkmoment zum automatischen Lenken ist.

4. Vorrichtung nach einem der Ansprüche 1 bis 3, **dadurch gekennzeichnet, dass** ein idealer Fahrweg in eine Querparklücke (7) aus drei geraden Segmenten (51, 52, 53) genähert ist, die durch Kreisbögen (54, 55) und/oder Ellipsen miteinander verbunden sind.

5. Vorrichtung nach einem der Ansprüche 1 bis 4, **dadurch gekennzeichnet, dass** ein idealer Fahrweg in eine Kopfparklücke (9) aus zwei geraden Segmenten (81, 82) genähert ist, die durch einen Kreisbogen (83) verbunden sind.

6. Vorrichtung nach einem der Ansprüche 1 bis 5, **dadurch gekennzeichnet, dass** die Ermittlung des Soll-Fahrwegs adaptiv an Fahrzeugtoleranzen und/oder einen Fahrer und/oder einen Zustand der Fahrbahn anpassbar ist.

7. Vorrichtung nach einem der Ansprüche 1 bis 6, **dadurch gekennzeichnet, dass** der Sensor (2) mindestens ein Raddrehimpulssensor, ein Raddrehzahlsensor, ein Raddrehgeschwindigkeitssensor, ein Abstandssensor, ein Winkelsensor und/oder ein Bewegungssensor ist.

8. Verfahren zur Unterstützung eines Fahrers beim Einparken eines Kraftfahrzeugs in eine Quer- oder Kopfparklücke, wobei mindestens ein Segment für einen Soll-Fahrweg des Kraftfahrzeugs in die Quer- oder Kopfparklücke berechnet wird,
**dadurch gekennzeichnet, dass**
eine Abweichung des Ist-Fahrweg des Kraftfahrzeugs von dem Soll-Fahrweg (5, 8) mittels mindestens eines Sensors (2) erfasst oder ermittelt wird und kontinuierliche Fahr- und/oder Lenkanweisungen mindestens über einen Teilweg zum Einparken in eine Kopf- oder Querparklücke (7, 9) in Abhängigkeit der Abweichung berechnet werden.

9. Verfahren nach Anspruch 8, **dadurch gekennzeichnet, dass** Fahrt- und/oder Lenkanweisungen optisch, akustisch und/oder haptisch ausgegeben werden.

10. Verfahren nach Anspruch 9, **dadurch gekennzeichnet, dass** die haptische Ausgabe ein Zusatzlenkmoment, ein Überlagerungswinkel und/oder ein Lenkmoment zum automatischen Lenken ausgibt.

11. Verfahren nach einem der Ansprüche 8 bis 10, **dadurch gekennzeichnet, dass** ein idealer Fahrweg in eine Querparklücke (7) aus drei geraden Segmenten (51, 52, 53) genähert wird, die durch Kreisbögen (54, 55) und/oder Ellipsen miteinander verbunden werden.

12. Verfahren nach einem der Ansprüche 8 bis 11, **dadurch gekennzeichnet, dass** ein idealer Fahrweg in eine Kopfparklücke (9) aus zwei geraden Segmenten (81, 82) genähert wird, die durch einen Kreisbogen (83) verbunden werden.

13. Verfahren nach einem der Ansprüche 8 bis 12, **dadurch gekennzeichnet, dass** die Ermittlung des Soll-Fahrwegs adaptiv an Fahrzeugtoleranzen und/oder einen Fahrer und/oder einen Fahrbahnzustand angepasst wird.

14. Verfahren nach einem der Ansprüche 8 bis 13, **dadurch gekennzeichnet, dass** mittels des Sensors (2) ein Abstand, ein Winkel des Fahrzeugs und/oder eine Fahrzeugbewegung erfasst werden.
